# EUROPÄISCHE PATENTSCHRIFT

(11) **EP 2 336 005 B1**
(45) Veröffentlichungstag und Bekanntmachung des Hinweises auf die Patenterteilung: **22.08.2012**
(21) Anmeldenummer: 10015587.8
(22) Anmeldetag: 14.12.2010
(51) Int. Cl.: B62D 21/05, B62D 5/00, B60G 21/055

(54) **Anordnung von Stelleinheiten zum Lenken der Räder von Radaufhängungen für Kraftfahrzeuge und zur Wankstabilisierung**
Assembly of positioning units for steering the wheels of wheel suspensions for motor vehicles and roll stabilisation
Agencement d'unités de réglage destinées à guider des roues de suspensions de roues pour véhicules automobiles et à la stabilisation de roulis

(30) Priorität: 18.12.2009 DE 102009058972
(43) Veröffentlichungstag der Anmeldung: 22.06.2011
(73) Patentinhaber: Audi AG, 85045 Ingolstadt (DE)
(72) Erfinder: Ohletz, Armin, 85092 Kösching (DE); Michel, Wilfried, 93339 Riedenburg (DE)
(74) Vertreter: Asch, Konrad

(56) Entgegenhaltungen:
- DE-A1- 19 920 051
- DE-A1-102008 009 874
- JP-A- 2008 168 791
- US-A- 5 879 026

## Beschreibung

Die Erfindung betrifft eine Anordnung von Stelleinheiten zum Lenken der Räder von Radaufhängungen für Kraftfahrzeuge und zur Wankstabilisierung des Kraftfahrzeuges gemäß dem Oberbegriff des Patentanspruches 1.

Zur Fahrdynamikverbesserung und aus Komfortgründen werden vermehrt Radaufhängungen entwickelt, die mittels meist elektrisch betriebener Stelleinheiten ein Lenken der Räder und eine Wankstabüisierung der Karosserie des Kraftfahrzeuges bewirken. Die Wankstabilisierung kann dabei mittels geteilter Querstabilisatoren ausgeführt werden, die über die Stelleinheit gleichsinnig oder gegensinnig verstellt werden und z. B. als Zusatzfeder zu Hauptfedern wirken. Durch die DE 10 2008 009 874 A1 ist es bekannt, die beiden Stelleinheiten in Querrichtung einander benachbart und vor der Raddrehachse der Räder der Radaufhängungen anzuordnen. Dies kann sich jedoch hinsichtlich der optimalen Anbindung der Stelleinheiten an den Radaufhängungen, einer günstigen Gewichtsverteilung und Krafteinleitung, .sowie in der räumlich gedrängten Anordnung der Bauteile als problematisch erweisen. Aufgabe der Erfindung ist es, eine Anordnung der besagten Stelleinheiten vorzuschlagen, die eine günstige Gewichtsverteilung ermöglicht, montagefreundlich ist und die eine vorteilhafte, räumlich entkoppelte Anbindung an die Radführungselemente der Radaufhängungen ermöglicht.

Diese Aufgabe wird erfindungsgemäß mit den Merkmalen des Patentanspruches 1 gelöst. Vorteilhafte Weiterbildungen der Erfindung sind in den Unteransprüchen angeführt.

Erfindungsgemäß wird vorgeschlagen, dass die Lenkungs-Stelleinheit mit auf Radführungselemente der Radaufhängungen wirkende Spurstangen an dem einen Querträger des Achsträgers und die Wankstabilisierungs-Stelleinheit mit den auf die Radführungselemente wirkenden, geteilten Querstabilisatoren an dem anderen Querträger des Achsträgers angeordnet und befestigt sind. Neben der vorgeschlagenen räumlichen Entkopplung der Stelleinheiten mit unproblematischen Freigängen der Spurstangen, Querstabilisatoren, etc. und deren günstiger Anbindung an die Radführungselemente, wie Radträger und/oder Querlenker, wird eine aufgeteilte und relativ gleichmäßige Kraft- und Momentenabstützung im Achsträger erzielt.

In vorteilhafter Weiterbildung der Erfindung können bei hinteren Radaufhängungen mit gelenkten Rädern die Lenkungs-Stelleinheit in Fahrtrichtung des Kraftfahrzeuges gesehen hinten und die Wankstabilisierungs-Stelleinheit vorne angeordnet sein, während insbesondere bei vorderen Radaufhängungen eine umgekehrte Anordnung mit hinten positionierter Wankstabilisierungs-Stelleinheit und vorne liegender Lenkungs-Stelleinheit besonders zweckmäßig sein kann. Die Wankstabilisierungs-Stelleinheit liegt damit stets in dem geschützteren, der Fahrzeugmitte zugewandten Abschnitt der Radführungselemente.

Des Weiteren können beide Stelleinheiten mit Bezug zum jeweiligen Querträger in Fahrtrichtung des Kraftfahrzeuges vorne oder hinten positioniert sein, so dass zumindest eine der Stelleinheiten bauraumgünstig innerhalb des Achsträgers positioniert ist und trotzdem eine konstruktiv adäquate Anbindung an die Radführungselemente der Radaufhängungen sichergestellt ist.

Ferner können in einer bevorzugten Ausgestaltung der Erfindung die Spurstangen der Lenkungs-Stelleinheit am lenkbaren Radträger der Radaufhängungen und die Querstabilisatoren der Wankstabilisierungs-Stelleinheit am jeweils unteren Lenker angreifen.

Die Stelleinheiten können schließlich in an sich bekannter Weise durch jeweils ein Stellgetriebe und einen dieses antreibenden Elektromotor gebildet sein.

Ein Ausführungsbeispiel der Erfindung ist im Folgenden anhand der beiliegenden, skizzenhaften Zeichnung näher erläutert, die eine Draufsicht auf eine Radaufhängung für die hinteren Räder eines Kraftfahrzeuges mit an einem Achsträger befestigten Stelleinheiten zum Lenken der Räder und zur Wankstabilisierung zeigt.

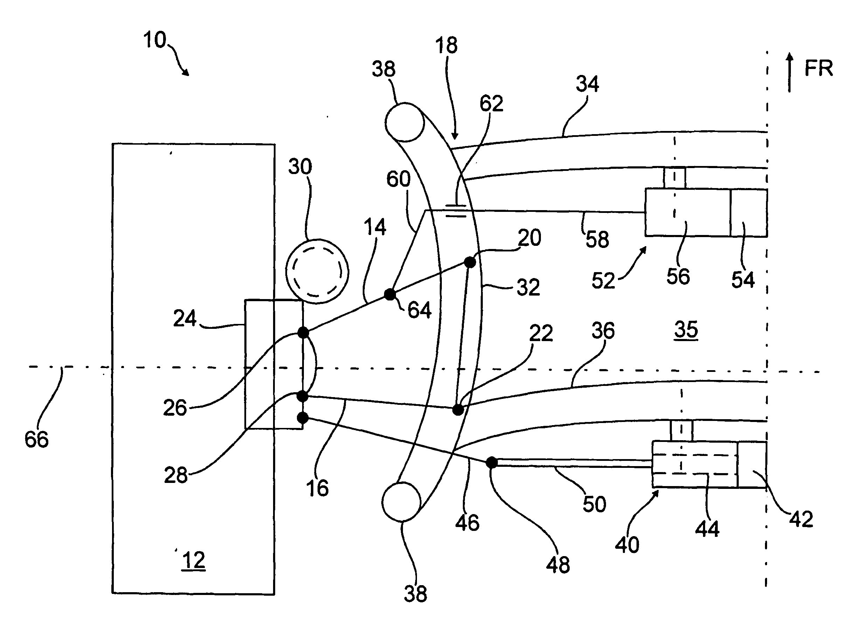

In der Zeichnung ist mit 10 eine auf der linken Fahrzeugseite angeordnete Radaufhängung für ein hinteres Rad 12 eines Kraftfahrzeuges bezeichnet, von der jedoch nur die untere Lenkerebene mit zwei Einzellenkern 14, 16 als Querlenker dargestellt ist. Anstelle der beiden Einzellenker 14, 16 kann auch ein Trapezlenker oder ein Dreieckslenker vorgesehen werden.

Die Einzellenker 14, 16 sind einerseits an einem Achsträger 18 (oder Hilfsrahmen) über Lagerstellen 20, 22 und andererseits an einem das Rad 12 aufnehmenden Radträger 24 über Lagerstellen 26, 28 (z. B. Kugelgelenke) angelenkt.

Die oberen, nicht dargestellten Radführungselemente können weitere Einzellenker oder ein Dreieckslenker oder ein am Radträger 24 oder an einem unteren Einzellenker abgestütztes Federbein sein. Ferner weist die Radaufhängung 10 eine Hauptfeder 30 (nur angedeutet) und einen Stoßdämpfer

(nicht dargestellt) auf, die gegebenenfalls zu dem besagten Federbein vereint sind.

Der Achsträger 18 setzt sich aus zwei Längsträgern 32 (es ist in der nur eine Fahrzeughälfte darstellenden Zeichnung nur ein Längsträger 32 ersichtlich, die andere Hälfte mit der rechtsseitigen Radaufhängung ist spiegelbildlich gleich) und zwei Querträgern 34, 36 zusammen, die fest miteinander verbunden sind und über vier Hilfsrahmenlager 38 jeweils an den Enden der Längsträger 32 mit dem nicht dargestellten Aufbau des Kraftfahrzeuges verschraubt sind. Die Querträger 34, 36 sind beiderseits der eingezeichneten Raddrehachse 66 des Rads 12 positioniert.

An dem in Fahrtrichtung FR des Kraftfahrzeuges hinten liegenden Querträger 36 des Achsträgers 18 ist eine Lenkungs-Stelleinheit 40 mittels mehrerer Schrauben (nicht dargestellt) befestigt.

Die Lenkungs-Stelleinheit 40 besteht aus einem antreibenden, ringförmigen Elektromotor 42 (nur angedeutet), der über einen Kugelgewindetrieb 44 eine Stellspindel 50 linear verstellt Die Spurstange 46 ist über ein Kugelgelenk 48 an der verlängerten Stellspindel 50 des Kugelgewindetriebes 44 und am Radträger 24 angelenkt, so dass bei deren Verschiebung der Radträger 24 um eine durch die Radführungselemente (Lenker 14, 16 und obere Radführungselemente) gebildete Lenkachse schwenkbar ist.

An dem in Fahrtrichtung FR des Kraftfahrzeuges vorne liegenden Querträger 34 des Achsträgers 18 ist eine Wankstabilisierungs-Stelleinheit 52 mittels mehrerer, nicht eingezeichneter Schrauben befestigt. Die Stelleinheit 52 ist dabei, wie aus der Zeichnung ersichtlich ist, innerhalb des von den Längsträgern 32 und den Querträgern 34, 36 umschlossenen Raumes 35 und in der senkrechten Fahrzeuglängsmittelebene positioniert; die Stelleinheit 52 liegt somit in Fahrtrichtung FR gesehen hinter dem Querträger 34.

Die Wankstabilisierungs-Stelleinheit 52 setzt sich aus zwei Elektromotoren 54 und beiderseitigen Stellgetrieben 56 (z. B. Harmonic-drive-Getriebe oder Cycloidgetriebe hoher Übersetzungsgrade) zusammen, die ausgangsseitig auf zwei geteilte Querstabilisatoren 58 wirken, von denen in der Figur nur der linksseitige Querstabilisator 58 gezeigt ist.

Die an den Längsträgern 32 des Achsträgers 18 drehbar über Lagerstellen 62 gelagerten Querstabilisatoren 58 sind über abgewinkelte Arme 60 mit Kugelgelenken 64 an dem vorderen Lenker 14 oder einem Trapezlenker der Radaufhängung 10 angelenkt.

Durch gleichsinniges oder gegensinniges Verdrehen der Querstabilisatoren 58 über die Wankstabilisierungs-Stelleinheit 52 kann einem Wanken, Nicken, Tauchen, etc. des Kraftfahrzeuges entgegengewirkt werden. Ferner können die Querstabilisatoren 58 bei entsprechender Vorspannung als Zusatzfedern zur Hauptfeder 30 wirken oder gegebenenfalls über den Stelltrieb 52 auch wirkungslos geschaltet sein.

Durch entsprechende Ansteuerung der Lenkungs-Stelleinheit 40 kann das Rad 12 der Radaufhängung 10 in einem Umfang von mehreren Winkelgraden aus der Geradeausstellung heraus gelenkt werden, zum Beispiel zur Verwirklichung einer Allradlenkung des Kraftfahrzeuges.

Bei vorderen Radaufhängungen 10 des Kraftfahrzeuges mit im Wesentlichen gleicher Konstruktion kann der Radträger 24 so ausgeführt sein, dass ein weit größerer Lenkwinkel zur Erzielung einer Steer-by-wire-Lenkung des Kraftfahrzeuges über die Lenkungs-Stelleinheit 40 erzielbar ist.

Dabei ist es aus Auslegungsgründen vorteilhaft, wenn in Abweichung zu der dargestellten Anordnung der Lenkungs-Stelleinheit 40 und der Wankstabilisierungs-Stelleinheit 52 deren Position derart vertauscht ist, dass die Wankstabilisierungs-Stelleinheit 52 in Fahrtrichtung FR des Kraftfahrzeuges hinten am Querträger 36 positioniert ist und auf den Lenker 16 wirkt, während die Lenkungs-Stelleinheit 40 dann am vorderen Querträger 34 des Achsträgers 18 angeordnet ist.

### Bezugszeichenliste

- 10: Radaufhängung
- 12: Rad
- 14, 16: Einzellenker
- 18: Achsträger
- 20, 22: Lagerstellen
- 24: Radträger
- 26, 28: Lagerstellen
- 30: Hauptfeder
- 32: Längsträger
- 35: Raum
- 34, 36: Querträger
- 38: Hilfsrahmenlager
- 40.: Lenkungs-Stelleinheit
- 42: Elektromotor
- 44: Kugelgewindetrieb
- 46: Spurstange
- 48: Kugelgelenk
- 50: Stellspindel
- 52: Wankstabilisierungs-Stelleinheit
- 54: Elektromotor
- 56: Stellgetriebe
- 58: Querstabilisator
- 62: Lagerstelle
- 64: Kugelgelenk
- 66: Raddrehachse

## Patentansprüche

1. Anordnung von Stelleinheiten (40, 52) zum Lenken und zur Wankstabilisierung eines von einer Radaufhängung (10) getragenen Fahrzeugrads (12), wobei die Radaufhängung (10) über untere Lenker (14, 16) an einem mit dem Aufbau des Kraftfahrzeuges verbundenen Achsträger (18) angelenkt ist und der Achsträger (18) seitliche Längsträger (32) und diese verbindende Querträger (34, 36) aufweist, **dadurch gekennzeichnet, dass** die Lenkungs-Stelleinheit (40) mit auf Radführungselemente (24) wirkende Spurstangen (46) an dem einen Querträger (36) des Achsträgers (18) und die Wankstabilisierungs-Stelleinheit (52) mit auf Radführungselemente (14) wirkenden, geteilten Querstabilisatoren (58) an dem anderen Querträger (34) des Achsträgers (18) angeordnet und befestigt sind.

2. Anordnung nach Anspruch 1, **dadurch gekennzeichnet, dass** bei einer bevorzugt hinteren Radaufhängung (10) mit gelenktem Fahrzeugrad (12) die Lenkungs-Stelleinheit (40) in Fahrtrichtung (FR) des Kraftfahrzeuges gesehen hinten und die Wankstabilisierungs-Stelleinheit (52) vorne angeordnet ist.

3. Anordnung nach Anspruch 1 oder 2, **dadurch gekennzeichnet, dass** die Wankstabilisierungs-Stelleinheit (52) innerhalb eines vom Achsträger (18) begrenzten Bauraums (35) angeordnet ist, und/oder die Lenkungs-Stelleinheit (40) außerhalb des Bauraums (35) angeordnet ist.

4. Anordnung nach Anspruch 1, 2 oder 3, **dadurch gekennzeichnet, dass** bei einer bevorzugt vorderen Radaufhängung (10) mit gelenktem Fahrzeugrad (12) die Lenkungs-Stelleinheit (40) in Fahrtrichtung (FR) des Kraftfahrzeuges gesehen vorne und die Wankstabilisierungs-Stelleinheit (52) hinten angeordnet ist.

5. Anordnung nach einem der Ansprüche 1 bis 4, **dadurch gekennzeichnet, dass** beide Stelleinheiten (40, 52) in Fahrtrichtung (FR) jeweils hinter dem zugeordneten Querträger (34, 36) positioniert sind.

6. Anordnung nach einem der vorhergehenden Ansprüche, **dadurch gekennzeichnet, dass** die Spurstangen (46) der Lenkungs-Stelleinheit (40) am lenkbaren Radträger (24) der Radaufhängung (10) und die Querstabilisatoren (58) der Wankstabilisierungs-Stelleinheit (52) am unteren Lenker (14) angreifen.

7. Anordnung nach einem der vorhergehenden Ansprüche, **dadurch gekennzeichnet, dass** die Stelleinheiten (40, 52) jeweils durch zumindest ein Stellgetriebe (44, 56) und zumindest einen diese antreibenden Elektromotor (42, 54) gebildet sind.

8. Anordnung nach einem der vorhergehenden Ansprüche, **dadurch gekennzeichnet, dass** die Lenkungs-Stelleinheit (40) und die Wankstabilisierungs-Stelleinheit (52) in Fahrtrichtung (FR) betrachtet jeweils gegenüberliegend vor und/oder hinter der Raddrehachse (66) liegen.

9. Anordnung nach einem der vorhergehenden Ansprüche, **dadurch gekennzeichnet, dass** die Lenkungs-Stelleinheit (40) über jeweils eine Stellspindel (50) mit der Spurstange (46) verbunden ist, wobei die Verschiebungsachsen der Stellspindel (50) und der Querstabilisatoren (58) im Wesentlichen achsparallel sind.

10. Anordnung nach einem der vorhergehenden Ansprüche, **dadurch gekennzeichnet, dass** die Lenkungs-Stelleinheit (40) für jede Spurstange (46) jeweils einen Stellmotor (42) aufweist, und/oder die Wankstabilisierungs-Stelleinheit (52) für jeden Querstabilisator (58) einen Stellmotor (54) aufweist.

## Claims

1. Arrangement of control units (40, 52) for steering and for roll stabilisation of a vehicle wheel (12) carried by a wheel suspension (10), the wheel suspension (10) being articulated via lower suspension links (14, 16) to an axle carrier (18) which is connected to the body of the motor vehicle, and the axle carrier (18) comprising side members (32) and crossmembers (34, 36) connecting said side members, **characterised in that** the steering control unit (40) is arranged on and fastened to one crossmember (36) of the axle carrier (18) by track rods (46) which act on wheel guide elements (24), and the roll stabilisation control unit (52) is arranged on and fastened to the other crossmember (34) of the axle carrier (18) by divided transverse stabiliser bars (58) which act on wheel guide elements (14).

2. Arrangement according to claim 1, **characterised in that**, in a preferably rear wheel suspension (10) having a steered vehicle wheel (12), the steering control unit (40) is arranged to the rear and the roll stabilisation control unit (52) is arranged to the front, viewed in the direction of travel (FR) of the motor vehicle.

3. Arrangement according to either claim 1 or claim 2, **characterised in that** the roll stabilisation control unit (52) is arranged inside an installation space (35) defined by the axle carrier (18), and/or the steering control unit (40) is arranged outside the installation space (35).

4. Arrangement according to claim 1, 2 or 3, **characterised in that**, in a preferably forward wheel suspension (10) having a steered vehicle wheel (12), the steering control unit (40) is arranged to the front and the roll stabilisation control unit (52) is arranged to the rear, viewed in the direction of travel (FR) of the motor vehicle.

5. Arrangement according to any of claims 1 to 4, **characterised in that** the two control units (40, 52) are both positioned behind the assigned crossmember (34, 36) in the direction of travel (FR).

6. Arrangement according to any of the preceding claims, **characterised in that** the track rods (46) of the steering control unit (40) act on the steerable wheel carrier (24) of the wheel suspension (10), and the transverse stabiliser bars (58) of the roll stabilisation control unit (52) act on the lower suspension link (14).

7. Arrangement according to any of the preceding claims, **characterised in that** the control units (40, 52) are each formed by at least one control gear (44, 56) and at least one electric motor (42, 54) driving this control gear.

8. Arrangement according to any of the preceding claims, **characterised in that** the steering control unit (40) and the roll stabilisation control unit (52) are located opposite each other in front of and/or behind the rotational axis (66) of the wheel, viewed in the direction of travel (FR).

9. Arrangement according to any of the preceding claims, **characterised in that** the steering control unit (40) is connected to the track rod (46) via an adjusting spindle (50) in each case, the displacement axes of the adjusting spindles (50) and of the stabiliser bars (58) being substantially axially parallel.

10. Arrangement according to any of the preceding claims, **characterised in that** the steering control unit (40) comprises one servomotor (42) for each track rod (46), and/or the roll stabilisation control unit (52) comprises one servomotor (54) for each stabiliser bar (58).

## Revendications

1. Aménagement d'unités de réglage (40, 52) pour guider et stabiliser au roulis une roue (12) de véhicule automobile portée par une suspension de roue (10), dans lequel la suspension de roue (10) est articulée, via des bras oscillants inférieurs (14, 16), sur un support d'essieu (18) raccordé à la structure du véhicule automobile et le support d'essieu (18) présente des longerons latéraux (32) et des traverses (34, 36) qui les raccordent, **caractérisé en ce que** l'unité de réglage de direction (40) est aménagée et fixée avec des barres d'accouplement (46) agissant sur des éléments guide-roue (24) sur la première traverse (36) du support d'essieu (18) et l'unité de réglage de stabilisation au roulis (52) est aménagée et fixée avec des stabilisateurs transversaux (58) divisés agissant sur des éléments guide-roue (14) sur l'autre traverse (34) du support d'essieu (18).

2. Aménagement selon la revendication 1, **caractérisé en ce que**, dans le cas d'une suspension de roue arrière préférée (10) avec une roue de véhicule articulée (12), l'unité de réglage de direction (40) est aménagée, en observant dans le sens de marche (FR) du véhicule automobile, à l'arrière et l'unité de réglage de stabilisation au roulis (52) à l'avant.

3. Aménagement selon la revendication 1 ou 2, **caractérisé en ce que** l'unité de réglage de stabilisation au roulis (52) est aménagé à l'intérieur d'un espace structurel délimité par le support d'essieu (18) et/ou l'unité de réglage de direction à l'extérieur de l'espace structurel (35).

4. Aménagement selon la revendication 1, 2 ou 3, **caractérisé en ce que**, dans le cas d'une suspension de roue avant préférée (10) avec une roue de véhicule (12) articulée, l'unité de réglage de direction (40) est aménagée, en observant dans le sens de marche (FR) du véhicule automobile, à l'avant et l'unité de réglage de stabilisation au roulis (52) à l'arrière.

5. Aménagement selon l'une quelconque des revendications 1 à 4, **caractérisé en ce que** les deux unités de réglage (40, 52) sont positionnées, dans le sens de marche (FR), respectivement à l'arrière de la traverse affectée (34, 36).

6. Aménagement selon l'une quelconque des revendications précédentes, **caractérisé en ce que** les barres d'accouplement (46) de l'unité de réglage de direction (40) s'engagent sur le support de roue orientable (24) de la suspension de roue (10) et les stabilisateurs transversaux (58) de l'unité de réglage de stabilisation au roulis (52) sur le bras oscillant inférieur (14)

7. Aménagement selon l'une quelconque des revendications précédentes, **caractérisé en ce que** les unités de réglage (40, 52) sont formés respectivement par au moins un mécanisme de réglage (44, 56) et par au moins un moteur électrique (42, 54) commandant celui-ci.

8. Aménagement selon l'une quelconque des revendications précédentes, **caractérisé en ce que** l'unité de réglage de direction (40) et l'unité de réglage de stabilisation au roulis (52) se situent, observées dans le sens de marche (FR), respectivement en regard devant et/ou derrière l'axe de rotation (66) des roues.

9. Aménagement selon l'une quelconque des revendications précédentes, **caractérisé en ce que** l'unité de réglage de direction (40) est raccordé à la barre d'accouplement respectivement vie une broche de réglage (50), dans lequel les axes de coulissement de la broche de réglage (50) et des stabilisateurs transversaux (58) sont sensiblement parallèles.

10. Aménagement selon l'une quelconque des revendications précédentes, **caractérisé en ce que** l'unité de réglage de direction (40) présente, pour chaque barre d'accouplement (46), respectivement un moteur de commande (52) et/ou l'unité de réglage de stabilisation au roulis (52) présente, pour chaque stabilisateur transversal (58), un moteur de commande (54).
